(19) **Europäisches Patentamt**

**European Patent Office**

**Office européen des brevets**

(11) **EP 0 979 796 A1**

(12) **EUROPÄISCHE PATENTANMELDUNG**

(43) Veröffentlichungstag:
    **16.02.2000 Patentblatt 2000/07**

(51) Int. Cl.⁷: **B66C 13/06**

(21) Anmeldenummer: **99115338.8**

(22) Anmeldetag: **03.08.1999**

(84) Benannte Vertragsstaaten:
    **AT BE CH CY DE DK ES FI FR GB GR IE IT LI LU MC NL PT SE**
    Benannte Erstreckungsstaaten:
    **AL LT LV MK RO SI**

(30) Priorität: **10.08.1998 DE 19836103**

(71) Anmelder:
    **SIEMENS AKTIENGESELLSCHAFT**
    **80333 München (DE)**

(72) Erfinder:
    • **Mengel, Peter, Dr.**
      **82223 Eichenau (DE)**
    • **Hepp, Franz**
      **81739 München (DE)**
    • **Wichner, Wolfgang**
      **90530 Wendelstein (DE)**

(54) **Vorrichtung und Verfahren zur zweidimensionalen Bestimmung von Lastpendelungen und/oder Rotationen an einem Kran**

(57) Der Automatisierungsbedarf an seilgebundenen Krananlagen zielt darauf ab, Pendelschwingungen und Rotationen von Lasten zu kompensieren bzw. auszuschließen. Durch den kombinierten Einsatz von an einer Laufkatze eines Kranes angebrachter Halbleiterkamera (2) zur zweidimensionalen Bildaufnahme und Infrarotbeleuchtungseinheit (3) mit mindestens einem Reflektor (4) an einem Lastaufnahmemittel (5) lassen sich Pendelungen und Rotationen der Last (6) über eine Auswerteeinheit ermitteln. Werden beispielsweise ein Kamerabezugssystem und eine digitale Bildverarbeitung und ein variabler Reflektor eingesetzt, so ergibt sich ein robustes System mit hoher Meßgenauigkeit.

FIG 1

LED-Scheinwerfer 3

Kamera 2

11

1 Laufkatze

7

7

8
Pendel-winkelbereich

Reflektor 4

5

6 Last

EP 0 979 796 A1

**Beschreibung**

Die Erfindung betrifft eine Vorrichtung sowie ein Verfahren womit an einem Kran auftretende Pendelungen einer Last bzw. eines Lastaufnahmemittels, sowie Rotationen (Skew) desselben erkannt und behoben werden können.

Bei Krananlagen werden in zunehmendem Maße automatisierte Lösch- und Lade-Zyklen angestrebt. Bei einem üblichen hierzu geeigneten Kran ist eine Laufkatze vorhanden, die über Tragseile eine Last dreidimensional verfahren kann. In einem derartigen seilgebundenen System wird die Last verschiedene Beschleunigungen erfahren und ebenso verschiedenartige Pendelschwingungen ausführen. Diese Pendelschwingungen müssen vor dem Absetzen der Last kompensiert bzw. eliminiert werden. Zur automatischen Kompensation der Lastpendelungen sollte zu jedem Zeitpunkt die aktuelle Auslenkung des Pendels bekannt sein. Unter dem Einfluß externer Störgrößen wie beispielsweise Pendelungen durch starken Wind, muß dazu der Pendelwinkel des Lastaufnahmemittels regelmäßig in kurzen Zeitabständen mit hoher Präzision gemessen werden.

Zur Messung an Kransystemen wurden bisher lineare Kamerasysteme verwendet, die in der Lage sind, eindimensionale Pendelschwingungen in Fahrtrichtung der Krankatze zu bestimmen. Ein derartiges System wird in der EP 0 596 330 B1 beschrieben. Dieses System dient zum meßtechnischen Erfassen von Lastpendelungen bei Kranen, wobei im Bereich der Last eine Markierung und am Kran eine auf die Markierung ausgerichtete Beleuchtungseinrichtung, sowie ein am Kran auf die Markierung ausgerichteter Detektor mit einem längs der Pendelrichtung ausgerichtetem Bildsensor angeordnet sind. Das System weist weiterhin eine Auswerteeinrichtung auf. Dieses System ist jedoch nicht bei allen Krantypen anwendbar, da keine Erfassung von Pendelauslenkungen senkrecht zur Fahrrichtung der Krankatze, sowie von Rotationsschwingungen der Last möglich ist. Darüber hinaus wird lediglich eine Zeilenkamera verwendet, die in der Regel nur eindimensionale Bildinformationen über den Schwingungszustand liefern kann.

Der Erfindung liegt die Aufgabe zugrunde, ein zuverlässiges System und ein Verfahren zur genauen zweidimensionalen optischen Messung von Pendelungen und Rotationen einer an einem Kran hängenden Last bereitzustellen.

Die Lösung dieser Aufgabe ergibt sich aus den Merkmalen der Ansprüche 1 bzw. 13.

Der Erfindung liegt die Erkenntnis zugrunde, daß der kombinierte Einsatz von einer Halbleiterkamera (Flächenkamera), einer Infrarot/Beleuchtungseinheit, mindestens einem Reflektor, der als Referenzmarke dient und einer Auswerteeinheit zur Auswertung des von der Halbleiterkamera aufgenommenen Reflektorbildes, ein robustes System zur präzisen zweidimensionalen Messung von Pendelwinkel und Rotation einer Last, die an einem Kran hängt, einsetzbar ist. Dabei sind zweckmäßigerweise Kamera und Beleuchtungseinheit an einer Kranlaufkatze montiert und auf einen Reflektor ausgerichtet, der an einem Lastaufnahmemittel angebracht ist. Reflektoren dieses Systemes weisen vorzugsweise mindestens eine gerade Kante auf, wodurch die Bildmerkmalserfassung und eine Bildauswertung erleichtert werden. Besondere Vorteile ergeben sich durch den Einsatz einer digitalen Bildverarbeitung hinsichtlich der Verarbeitungsgeschwindigkeit. Um einen Reflektor der als Referenzmarke in seiner relativen Lage zu einem Bezugssystem vermessen wird im Videobild der Kamera als eindeutig identifizierbare helle Fläche darzustellen, können der Kamera ein oder mehrere Infrarotfilter vorgeschaltet sein. Als Infrarotbeleuchtungseinheit ist vorteilhafterweise ein LED-Scheinwerfer (Light Emitting Diode) oder eine Vielzahl davon vorgesehen.

Somit liegt ein zweidimensionales Trackingsystem vor, bestehend aus einer intelligenten Matrixkamera (CCD-Flächenkamera) und einer Infrafotbeleuchtung an der Krankatze sowie einem Retroreflektor auf dem Lastaufnahmemittel, mit dem eine genaue zweidimensionale Bestimmung des Pendelwinkels durchgeführt werden kann. Das Verfahren ist geeignet die bisher eingesetzten Linearkamerasysteme zu ersetzen, mit denen nur eindimensionale Pendelschwingungen in Verfahrrichtung der Krankatze bestimmt werden können.

Nachdem die Kamera und die Beleuchtungseinheit an einer Laufkatze nebeneinander angeordnet sind, besteht eine vorteilhafte Ausgestaltung der Beleuchtungseinheit aus einem um die Kamera herum gebildeten Infrarotbeleuchtungsring. Die Reflektoren des Lastaufnahmemittels können aus Untereinheiten, sogenannten Reflektorsegmenten, aufgebaut sein. Zur Klassifizierung inwieweit ein Reflektorsegment einfallendes Licht in die gleiche Richtung zurück reflektieren kann wird die Divergenz eines Reflektorsegmentes betrachtet. Der Einsatz von Tripelreflektoren bewirkt, daß einfallendes Licht parallel in Richtung der Lichtquelle zurück reflektiert wird. Somit wird Fremdlicht ausgeschlossen, da dieses ebenfalls zu dessen Herkunftsquelle zurück reflektiert wird und nicht in den Aufnahmebereich der Kamera gelangt. Derartige Reflektoren können bei geringem Abstand zwischen Kamera, Beleuchtungseinheit einerseits und Reflektor andererseits aus Reflektorsegmenten unterschiedlicher Divergenz zusammengesetzt sein, so daß eine auswertbare Bildaufnahme des Reflektors durch die Kamera auf jeden Fall erreicht wird.

Durch die Anbringung von zwei oder mehreren beabstandeten Reflektoren an einem Lastaufnahmemittel läßt sich in einfacher Weise eine Drehlage eines Lastaufnahmemittels relativ zu einem Koordinatensystem der Kamera bzw. der Laufkatze feststellen.

Es ist weiterhin vorteilhaft, einen elektronischen Shutter zur Vermeidung von Bewegungsunschärfen vorzusehen.

Durch zeitlich aufeinanderfolgende Bildaufnahmen mit entsprechenden Auswertungen läßt sich die relative Lage eines Lastaufnahmemittels ständig verfolgen (tracking).

Erfaßbar ist ein Bereich für eine Pendelung von +/- 10° sowie ein Abstandsbereich zwischen Krankatze und Lastaufnahme von bis zu 50 m. Wird die Seillänge aktuell gemessen und der Wert einer Auswerteeinheit zugeführt, so ist die aktuelle Größe des Reflektorbildes in der Kamera bekannt.

Zweckmäßigerweise ist das gesamte System über die Kamera auf die Koordinaten der Laufkatze des Kranes kalibriert.

Durch die Erfindung werden insbesondere folgende Vorteile erzielt:

- die Laserleistung kann heraufgesetzt werden, da der Laser im Impulsbetrieb arbeitet,
- der Einsatz des Bilddifferenzverfahrens ermöglicht die Eliminierung der durch beispielsweise Sonnenlicht verursachten Störstrukturen,
- die Ausführung des Infrarotscheinwerfers als ringförmige Anordnung aus einer Vielzahl von LED-Einzeldioden ermöglicht eine kompakte Bauweise im Bereich der Messkamera.

Im folgenden werden anhand von schematischen Figuren weitere Ausführungsbeispiele beschrieben:

Figur 1　　zeigt die Sensorik zur Erfassung des Pendelwinkels,

Figur 2　　zeigt in der Draufsicht zwei Reflektoren 4 in quadratischer Form, wobei das zugehörige Lastaufnahmemittel relativ zum Kamerabezugssystem verdreht ist,

Figur 3　　zeigt einen Reflektor aus Reflektorsegmenten mit gleicher Divergenz,

Figur 4　　zeigt einen Reflektor aus Reflektorsegmenten unterschiedlicher Divergenz,

Figur 5　　zeigt eine Frontansicht einer Kamera mit einer Vielzahl von umgebenden LED-Scheinwerfern,

Figur 6　　zeigt ein Ablaufdiagramm einer Reflektorsuche mit Differenzbildverfahren.

Die Vorrichtungen und das Verfahren zur zweidimensionalen Bestimmung von Lastpendelungen bzw. Lastrotationen kann zur präzisen zweidimensionalen und optischen Messung von Pendelwinkeln und zur Feststellung von Rotationen einer Last, die an einem Lastaufnahmemittel befestigt ist, für einen Arbeitsbereich bzw. für Tragseillängen bis zu etwa 50 m Verwendung finden. Das zweidimensionale Trackingsystem besteht aus einer intelligenten Matrixkamera (CCD Flächenkamera), die unterhalb einer Laufkatze 1 eines Kranes montiert ist, sowie aus einer in der Form vorgegebenen Referenzmarke bzw. einem Reflektor (Retroreflektor), befestigt auf dem Lastaufnahmemittel 5, das über Tragseile 7 mit der Laufkatze 1 verbunden ist. Der Reflektor wird mittels einer geeigneten Infrarot-LED-Beleuchtung von der Laufkatze aus beleuchtet. Durch Verwendung geeigneter schmalbandiger Infrarotfilter vor der Kamera erscheint der Reflektor im Videobild der Kamera als eindeutig identifizierbare helle Fläche. Der Vorteil der Infrarot-LED-Beleuchtung gegenüber herkömmlichen Scheinwerfern besteht in der hohen Robustheit gegenüber mechanischen Einflüssen, der langen Lebensdauer und dem niedrigen Stromverbrauch. Die x, y-Position eines Reflektors in einem Erwartungsbereich für ein Videobild wird mit Methoden der digitalen Bildverarbeitung aus den Kantenlagen des Reflektors berechnet. Durch die zeitliche Zuordnung von Bild zu Bild kann der Reflektor 4 bei kurzen Auswertezeiten verfolgt bzw. getrackt und durch die bekannte Reflektorform kann eine Trennung von Störobjekten vorgenommen werden (Pattern-Matching-Verfahren).

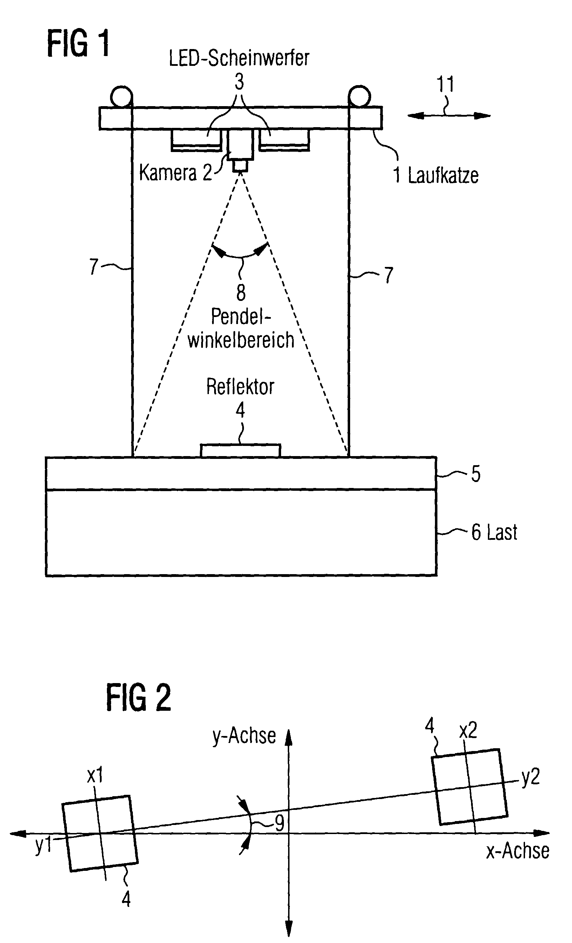

Figur 1 zeigt schematisch eine Vorrichtung zur Messung von Pendelwinkeln in einem Pendelwinkelbereich 8. Dargestellt sind eine Beleuchtungseinheit bestehend aus LED-Scheinwerfern 3, die symmetrisch zur Kamera 2 an der Laufkatze 1 eines Kranes angebracht sind. Über Tragseile 7 ist ein Lastaufnahmemittel 5 (Spreader, anpassungsfähig in der Größe) an die Laufkatze 1 angehängt, wobei eine Last 6 wiederum am Lastaufnahmemittel 5 befestigt ist. Die Bewegungsrichtung 11 der Laufkatze 1 ist durch einen Doppelpfeil dargestellt. Die Kamera ist auch hier wiederum mit einem schmalbandigen Infrarotdurchlaßfilter kombiniert. Die LED-Scheinwerfer 3 können matrixartig oder ringförmig relativ zur Kamera 2 angeordnet sein. Die Infrarot-LED-Dioden strahlen nach unten und beleuchten intensiv den Pendelwinkelbereich 8, der beispielsweise +/- 10° von der Senkrechten gerechnet, beträgt. Ein Reflektor 4 auf dem Lastaufnahmemittel wirft das Licht in Richtung der Scheinwerfer 3 und der Kamera 2 zurück. Die Kamera 2 ermittelt über einen in der Kamera integrierten Bildauswerterechner den Pendelwinkel der Last 6 in zwei Dimensionen, also relativ zu den ebenen Koordinatenachsen x und y. Das Ergebnis wird beispielsweise über einen Feldbus (Profibus) ausgegeben.

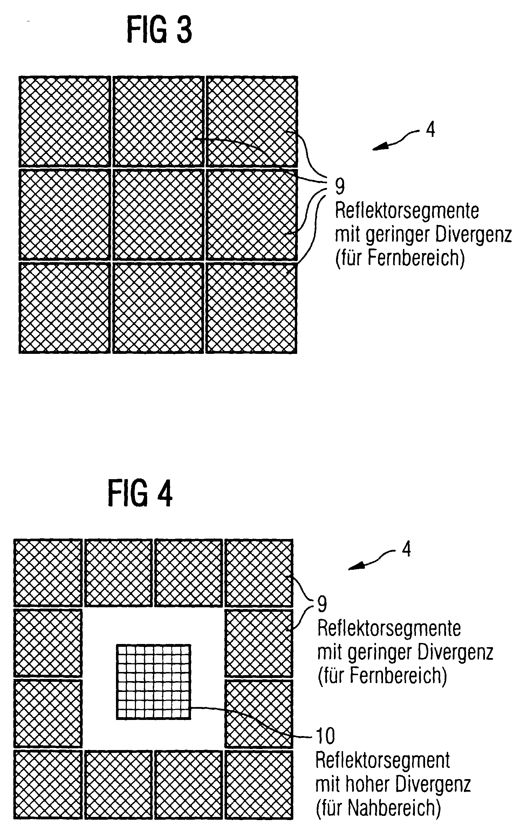

Die Figur 3 zeigt einen aus bzgl. der Divergenz gleichartigen Reflektorsegmenten 9 aufgebauten Reflektor 4. Gezeigt wird ein Array bzw. eine Anordnung aus reflektierenden Tripel-Reflektoren (Retroreflektoren). Die Tripelreflektoren werfen das von einer Lichtquelle her einfallende Licht parallel in Richtung der Lichtquelle zurück. Die Anordnung schließt somit Fremdlicht aus, da dieses ebenfalls zur Herkunftsquelle zurückgeworfen wird und nicht in den Aufnahmebereich der Kamera gelangt. Zur Erzielung hoher Leuchtdichten bei großen Arbeitsabständen ist es vorteilhaft, Reflektoren mit geringer Divergenz einzusetzen. Dies hat allerdings zur Konsequenz, daß im Nahbereich, d. h. bis etwa 4 m Abstand, das Licht zu stark in Richtung der LED-Lichtquellen reflektiert wird und aufgrund des geometrischen Abstandes zwischen Kamera und LED Scheinwerfer 3 nur wenig Licht in die Kamera 2 gelangt. Zur Verbesserung des Beleuchtungskontrastes im Nahbereich ist vorgesehen, einen Reflektor 4 zu verwenden, der aus einer Matrixanordnung von Retoreflektoren mit niedriger und hoher Divergenz in einer für die Bildauswertung vorteilhaften geometrischen Ausführung besteht. Somit ist sichergestellt, daß im gesamten Arbeitsbereich eine Bildaufnahme des Reflektors, der eine Referenzmarke darstellt, mit hoher Leuchtdichte erreicht wird, siehe hierzu Figuren 3 und 4. Geometrische Varianten zu der in Bild 3 dargestellten Anordnung sind ebenfalls möglich.

In Figur 4 ist ein Reflektor 4 dargestellt, der aus Reflektorsegmenten 9 und Reflektorsegmenten 10 besteht, wobei sich die Reflektorsegmente im Maß ihrer Divergenz unterscheiden. Reflektorsegmente 9 mit geringer Divergenz decken den Fernbereich, d. h. den größeren Abstand zwischen Laufkatze 1 und Lastaufnahmemittel 5 ab. Die Reflektorsegmente 10 mit hoher Divergenz decken den Nahbereich ab, so daß auch hier von den LED-Scheinwerfern 3 ausgesandtes Licht vom Reflektor 4 in die unmittelbar neben den LED-Scheinwerfern 3 positionierte Kamera 2 fällt.

Die Erfassung von Rotationsschwingungen oder Drehschwingungen des Lastaufnahmemittels 5 lassen sich nach einer Kalibrierung und Festlegung eines Bildkoordinatensystemes bzw. Festlegung von Bildkoordinatenachsen an oder in der Kamera aus der Drehlage eines Reflektorbildes bestimmen. Dies ist problemlos im Nahbereich bis zu einem Abstand von ca. 10 m möglich. Um eine hinreichende Genauigkeit an einem einzigen Reflektor 4 bei der Verarbeitung des zugehörigen Bildes zu erreichen, muß eine Mindestmenge von Pixeln vorhanden sein. Da diese Zahl bei größeren Abständen zwischen Kamera 2 und Lastaufnahmemittel 5 abnimmt, sinkt auch die Genauigkeit der Auswertung anhand nur eines einzigen Reflektors 4. Bei größeren Abständen ist es vorteilhaft, einen zusätzlichen Reflektor 4 einzusetzen. Die Reflektoren 4 dienen als Referenzmaße, d. h. ihre Lage oder Positionierung relativ zum Lastaufnahmemittel 5 ist bekannt, so daß aus der Lage des Reflektors 4 im Videobild der Kamera 2 unmittelbar auf die Lage des Lastaufnahmemittels 5 geschlossen werden kann. Das Gesichtsfeld der Kamera 2 ist bei großen Abständen groß genug, um immer beide Reflektoren 4 im Bild zu erfassen. Die Bildauswertung bestimmt jeweils die Mittelpunkte $(x_i, y_i;$ mit $i = 1, 2)$. Die aktuelle Position $(x_0, y_0$ des Lastaufnahmemittels 5 kann nun aus dem Mittelwert der beiden Reflektoren berechnet werden.

$$X_0 = (x_1 + x_2)/2$$

$$y_0 = (y1 + y_2)/2$$

Der Drehwinkel $\rho$ ergibt sich aus den beiden Reflektormittelpunkten zu

$$\rho = \arctan (y_2 - y_1)/(x_2 - x_1).$$

Die Bildauswertung erfolgt mittels eines elektronischen Shutters, um Bewegungsunschärfen der schwingenden Last zu vermeiden. Das Kamerabild wird dann automatisch mit Methoden der digitalen Bildverarbeitung durch die in der Kamera enthaltene Auswerteeinheit (Recheneinheit) ausgewertet. Die wichtigsten Merkmale der Bildauswertung sind

1. Berücksichtigung der unterschiedlichen Größe der Reflektoren im Bild bei unterschiedlichen Seillängen.
2. Weitgehende Unterdrückung von Störstukturen durch Überprüfung der Reflektorgeometrie.

Zur Durchführung der Bildauswertung wird der aktuelle Abstand zwischen Kamera 2 und Reflektor 4 von der Kransteuerung an die Auswerteeinheit übergeben, so daß dem Auswertesystem bei der Bildauswertung die entfernungsabhängige Größe des Reflektors 4 bekannt ist. Dabei können Suchbereiche gesetzt werden, die mögliche Lagen der zu suchenden Reflektoren im Bild einschränken. Die Erfassung von Störstrukturen wird so zum großteil ausgeschlossen. Die Bestimmung der Position des Reflektors im Bild erfolgt durch Kantenerfassung aus dem Gradienten der digitalisierten Videodaten. Zur weiteren Unterdrückung von Störstrukturen wird die Form des Reflektors mittels statistischer Verfahren und durch pattern-matching-Verfahren ausgewertet.

Ein Reflektor 4 kann beispielsweise quadratisch ausgebildet sein und eine Kantenlänge von 25 cm aufweisen. Zur Darstellung eines im Betrieb von Krananlagen notwendigen Betriebsbereiches lassen sich die Reflektoren 4 durch entsprechende Auslegung mit mehr oder weniger divergenten Reflektorsegmenten 9, 10 anpassen. Mit einer entsprechenden Kalibrierung und Einführung eines Kamerabezugssystemes läßt sich eine Rotation eines Lastaufnahmemittels 5 relativ zur Laufkatze 1 sowohl im nahen, als auch im fernen Bereich feststellen.

Die Ausführung des LED-Scheinwerfers als Ringlicht minimiert den geometrischen Abstand zwischen Kamera und Beleuchtung. Dadurch wird in Verbindung mit einem Retroreflektor der Beleuchtungskontrast im Kamerabild im Nahbereich verbessert. Der LED-Scheinwerfer kann synchron zur Kamera gepulst betrieben werden, d.h. er wird nur während der Bildaufnahmezeit eingeschaltet. Dadurch kann der Scheinwerfer mit höherem Strom, d.h. mehr Helligkeit betrieben werden. Die gesamte Energieaufnahme sinkt in der Regel im Verhältnis zu einem Dauerstrichbetrieb. Gleichzeitig wird weniger Wärme erzeugt und dadurch die Lebensdauer des LED-Scheinwerfers erhöht.

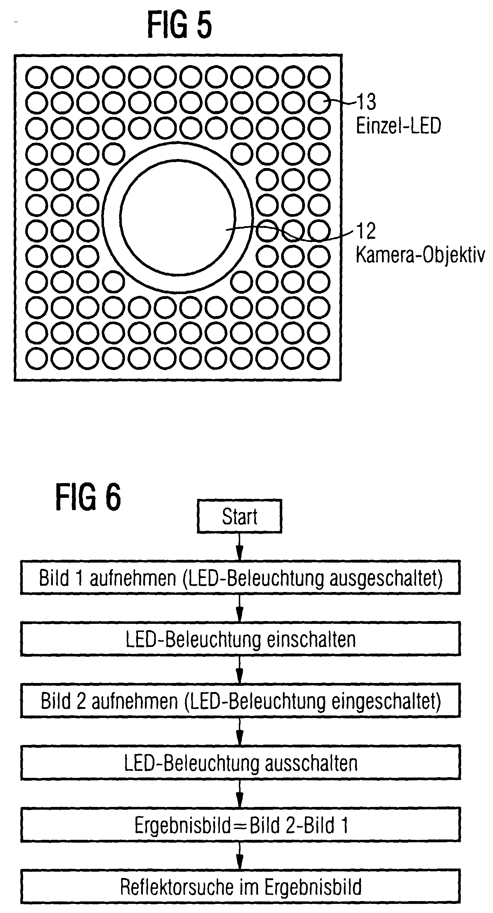

Die in Figur 5 dargestellte Frontansicht der Kameraeinheit zeigt das zentral positionierte Kamera-Objektiv 12 und die umliegenden Einzel-LEDs 13.

Das Ablaufdiagramm entsprechend Figur 6 betrifft das Differenzbildverfahren. Bei der Verwendung einer schaltbaren Beleuchtung bzw. einer gepulsten Beleuchtung kann innerhalb eines kurzen Zeitintervalles je ein Bild mit eingeschalteter und mit ausgeschalteter Beleuchtung aufgenommen und abgespeichert werden. Daraus kann mittels digitaler Bildverarbeitung ein Differenzbild berechnet werden, in welchem durch Umgebungslicht verursachte Störstrukturen unterdrückt werden.

**Patentansprüche**

1. Vorrichtung zur zweidimensionalen Bestimmung von Lastpendelungen und/oder -rotationen an einem Krank bestehend aus:

   - einer Halbleiterkamera zur zweidimensionalen Bildaufnahme, die an einer Laufkatze (1) eines Kranes angebracht und auf eine daran hängende Last (6) ausgerichtet ist,
   - einer direkt neben der Halbleiterkamera angebrachten Infrarot-Beleuchtungseinheit, die in Richtung der Last (6)abstrahlt,
   - mindestens einem an einem Lastaufnahmemittel (5) befestigten Reflektor (4) mit bekannter Ausrichtung relativ zum Lastaufnahmemittel, um von der Beleuchtungseinheit ausgesandte Infrarotstrahlung in die Halbleiterkamera zurückzureflektieren, und
   - einer Auswerteeinheit zur Berechnung eines Pendelwinkels und/oder einer Drehlage des Lastaufnahmemittels (5) anhand der detektierten Kontur des Reflektors (4).

2. Vorrichtung nach Anspruch 1, worin die Kontur des Reflektors (4) mindestens eine gerade Kante aufweist.

3. Vorrichtung nach einem der vorhergehenden Ansprüche, worin die Auswerteeinheit eine digitale Bildverarbeitung umfaßt.

4. Vorrichtung nach einem der vorhergehenden Ansprüche, worin der Kamera mindestens ein Infrarotfilter vorgeschaltet ist.

5. Vorrichtung nach Anspruch 4, worin der Infrarotfilter schmalbandig ausgelegt ist.

6. Vorrichtung nach einem der vorhergehenden Ansprüche, worin die Infrarot-Beleuchtungseinheit gepulst ist und die Pulslänge mit dem Start und der Dauer der Bildaufnahmezeit synchronisiert ist.

7. Vorrichtung nach einem der vorhergehenden Ansprüche, worin die Beleuchtungseinheit aus mindestens einem Infrarot-LED-Scheinwerfer besteht.

8. Vorrichtung nach Anspruch 7, worin mehrere Infrarot-LED-Scheinwerfer vorhanden sind, die eine Matrixanordnung oder einen Ring um die Kamera bilden.

9. Vorrichtung nach einem der vorhergehenden Ansprüche, worin mehrere einen Reflektor (4) bildende Reflektorsegmente (9) Tripel-Reflektoren mit gleicher Divergenz sind.

10. Vorrichtung nach Anspruch 9, worin ein Reflektor (4) aus Reflektorsegmenten (9) unterschiedlicher Divergenz besteht.

11. Vorrichtung nach einem der vorhergehenden Ansprüche, worin zwei oder mehr beabstandete Reflektoren (4) an dem Lastaufnahmemittel (5) angebracht sind.

12. Vorrichtung nach einem der vorhergehenden Ansprüche, worin eine Halbleiterkamera mit einem elektronischen Shutter zur Vermeidung von Bewegungsunschärfen vorgesehen ist.

13. Verfahren zur zweidimensionalen Bestimmung von Lastpendelungen und/oder -rotationen an einem Kran unter Einsatz einer Vorrichtung nach einem der Ansprüche 1-11, worin

    - eine an einer Laufkatze (1) eines Kranes befestigte Halbleiterkamera ein Bild eines an einem Lastaufnahmemittel (5)angebrachten Reflektors (4) aufnimmt,
    - eine direkt neben der Halbleiterkamera positionierte Infrarot-Beleuchtungseinheit den Reflektor (4) beleuchtet,
    - der Reflektor (4) im Videobild der Kamera als auswertbare Fläche dargestellt wird.

14. Verfahren nach Anspruch 13, worin ein Bilddifferenzverfahren bei der Erfassung des Reflektors (4) eingesetzt wird.

15. Verfahren nach Anspruch 13 oder 14, worin eine Auswertung des Kamerabildes durch digitale Bildverarbeitung auf der Basis der Kantenlagen des Reflektorbildes geschieht.

16. Verfahren nach einem der Ansprüche 13 - 15, worin die relative Lage des Reflektors (4) bei aufeinanderfolgenden Auswertungen verfolgt wird.

17. Verfahren nach einem der Ansprüche 13-16, worin anhand der bekannten Form des Reflektors (4) eine Trennung von Störobjekten bei der Auswertung geschieht.

**18.** Verfahren nach einem der Ansprüche 13-17, worin ein Pendelbereich (8) der Last (6) von mindestens +/-10 Grad erfaßt wird.

**19.** Verfahren nach einem der Ansprüche 13-18, worin die Größe des Reflektors (4) im Videobild der Kamera in Abhängigkeit von einer aktuellen Tragseillänge berücksichtigt wird.

**20.** Verfahren nach einem der Ansprüche 13-19, worin vorbestimmt Suchbereiche für die Kamera verwendet werden.

**21.** Verfahren nach einem der Ansprüche 13-20, worin ein Kamerabezugssystem auf die Koordinaten der Laufkatze (1) kalibriert ist.

**22.** Verfahren nach einem der Ansprüche 13-21, worin die Bestimmung der Rotation des Lastaufnahmemittels (5) durch Bestimmung der relativen Drehlage der Kanten eines Reflektors (4) zum Kamerabezugssystem geschieht.

**23.** Verfahren nach einem der Ansprüche 13-22, worin die Bestimmung der Rotation des Lastaufnahmemittels (5) aus der Mittelposition zweier beabstandeter Reflektoren relativ zum Kamerabezugssystem geschieht.

## FIG 1

LED-Scheinwerfer 3
Kamera 2
11
1 Laufkatze
7
7
8
Pendel-winkelbereich
Reflektor 4
5
6 Last

## FIG 2

y-Achse
x1
4 x2
y2
x-Achse
y1
9
4

## FIG 3

4

9
Reflektorsegmente
mit geringer Divergenz
(für Fernbereich)

## FIG 4

4

9
Reflektorsegmente
mit geringer Divergenz
(für Fernbereich)

10
Reflektorsegment
mit hoher Divergenz
(für Nahbereich)

## FIG 5

13
Einzel-LED

12
Kamera-Objektiv

## FIG 6

Start

Bild 1 aufnehmen (LED-Beleuchtung ausgeschaltet)

LED-Beleuchtung einschalten

Bild 2 aufnehmen (LED-Beleuchtung eingeschaltet)

LED-Beleuchtung ausschalten

Ergebnisbild = Bild 2 - Bild 1

Reflektorsuche im Ergebnisbild

Europäisches
Patentamt

Nummer der Anmeldung

EP 99 11 5338

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y,D | EP 0 596 330 A (SIEMENS) 11. Mai 1994 (1994-05-11)<br><br>* Spalte 6, Zeile 35 - Spalte 8, Zeile 32 * | 1,2,7,9, 11,13, 16,22 | B66C13/06 |
| Y | EP 0 246 922 A (ALBUS) 25. November 1987 (1987-11-25)<br><br>* Spalte 4, Zeile 15 - Spalte 6, Zeile 28 * | 1,2,7,9, 11,13, 16,22 | |
| A | DE 43 15 005 A (DEUTSCHE AEROSPACE) 10. November 1994 (1994-11-10) | | |
| A | EP 0 677 478 A (SAMSUNG HEAVY INDUSTRIES CO.) 18. Oktober 1995 (1995-10-18) | | |
| A | EP 0 846 648 A (MITSUBISHI HEAVY INDUSTRIES) 10. Juni 1998 (1998-06-10) | | RECHERCHIERTE SACHGEBIETE (Int.Cl.7) |
| A | DE 44 23 797 A (NOELL) 4. Januar 1996 (1996-01-04) | | B66C |
| A | WO 96 13455 A (SIEMENS) 9. Mai 1996 (1996-05-09) | | |

Der vorliegende Recherchenbericht wurde für alle Patentansprüche erstellt

| Recherchenort | Abschlußdatum der Recherche | Prüfer |
|---|---|---|
| DEN HAAG | 8. November 1999 | Van den Berghe, E |

## ANHANG ZUM EUROPÄISCHEN RECHERCHENBERICHT
## ÜBER DIE EUROPÄISCHE PATENTANMELDUNG NR.

EP 99 11 5338

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-11-1999

| Im Recherchenbericht angeführtes Patentdokument | | Datum der Veröffentlichung | Mitglied(er) der Patentfamilie | | Datum der Veröffentlichung |
|---|---|---|---|---|---|
| EP 596330 | A | 11-05-1994 | DE 59306585 D | | 03-07-1997 |
| | | | US 5491549 A | | 13-02-1996 |
| EP 246922 | A | 25-11-1987 | JP 63027391 A | | 05-02-1988 |
| | | | US 4883184 A | | 28-11-1989 |
| DE 4315005 | A | 10-11-1994 | DE 4425088 A | | 18-01-1996 |
| EP 677478 | A | 18-10-1995 | FI 951461 A | | 01-10-1995 |
| | | | JP 8198584 A | | 06-08-1996 |
| | | | US 5729453 A | | 17-03-1998 |
| | | | SG 44310 A | | 19-12-1997 |
| EP 846648 | A | 10-06-1998 | JP 10167662 A | | 23-06-1998 |
| DE 4423797 | A | 04-01-1996 | BE 1008539 A | | 04-06-1996 |
| | | | CN 1121897 A | | 08-05-1996 |
| | | | NL 1000718 C | | 10-06-1997 |
| | | | NL 1000718 A | | 02-01-1996 |
| | | | SG 32395 A | | 13-08-1996 |
| WO 9613455 | A | 09-05-1996 | EP 0788455 A | | 13-08-1997 |

EPO FORM P0461

Für nähere Einzelheiten zu diesem Anhang : siehe Amtsblatt des Europäischen Patentamts, Nr.12/82